# FASCICULE DE BREVET EUROPEEN

(11) **EP 1 499 449 B1**
(45) Date de publication et mention de la délivrance du brevet: **30.11.2005**
(21) Numéro de dépôt: 03746842.8
(22) Date de dépôt: 14.04.2003
(51) Int. Cl.: B05B 11/00

(54) **POMPE DE DISTRIBUTION DE PRODUIT FLUIDE**
FLUIDPRODUKTABGABEPUMPE
FLUID PRODUCT DISPENSING PUMP

(30) Priorité: 19.04.2002 FR 0205251
(43) Date de publication de la demande: 26.01.2005
(73) Titulaire: Valois SAS, 27110 Le Neubourg (FR)
(72) Inventeur: PETIT, Ludovic, F-27110 Vitot (FR)
(74) Mandataire: CAPRI
(86) Numéro de dépôt international: PCT/FR2003/001185
(87) Numéro de publication internationale: WO 2003/089151

(56) Documents cités:
- EP-A- 0 493 643
- US-A- 2 657 834
- US-A- 3 940 070
- US-A- 5 375 745

## Description

La présente invention concerne une pompe de distribution de produit fluide à actionnement manuel, ainsi qu'un dispositif de distribution de produit fluide comportant une telle pompe.

De manière connue, les pompes de distribution de produit fluide comportent généralement un corps de pompe dans lequel coulisse un piston entre une position de repos et une position de distribution. Le corps de pompe est cylindrique et les positions d'extrémité du piston, à savoir la position de repos et la position de distribution, sont définies par divers moyens, par exemple des moyens de butée. Lors de l'actionnement, la chambre de pompe est remplie de produit, et les exigences d'étanchéité sur le piston pendant qu'il se déplace à l'intérieur du corps de pompe sont très élevées pour éviter tout risque de fuite. Par conséquent, le corps de pompe doit exercer des contraintes radiales non négligeables sur le piston pendant qu'il se déplace en direction de sa position de distribution. Or, la plupart des pompes sont utilisées à intervalle plus ou moins régulier, et la pompe passe la plus grande partie du temps en position de repos. Les contraintes radiales élevées qui s'exercent sur le piston, également en position de repos, peuvent être désavantageuses en ce qu'à la longue elles peuvent endommager les lèvres d'étanchéité du piston ou les déformer, et ainsi diminuer leur étanchéité, ce qui peut mener à un dysfonctionnement de la pompe. D'autre part, certaines pompes utilisent un second piston également déplaçable axialement dans le corps de pompe entre une position de repos et une position de distribution respective. Ce second piston coulisse généralement dans une partie de diamètre réduit du corps de pompe. Dans ce type de pompe, ce second piston forme ou est relié d'une certaine manière au clapet d'entrée et/ou au clapet de sortie de la chambre de pompe. De manière similaire à ce qui a été dit précédemment, le corps de pompe est cylindrique et le second piston coulisse de manière étanche dans cette partie cylindrique du corps de pompe entre ses positions de repos et de distribution. Pour ce second piston, le risque existe que lorsqu'il revient de sa position de distribution vers sa position de repos, c'est à dire généralement pendant la phase d'expulsion du produit contenu dans la chambre de pompe, la dépression créée par cette expulsion à l'intérieur de la chambre de pompe ne provoque une ouverture prématurée du clapet d'entrée de la pompe, ou une fermeture prématurée du clapet de sortie de la chambre de pompe, dans les cas où l'ouverture et la fermeture de ces clapets sont commandées par ledit second piston. Pour remédier à ce problème, on peut prévoir d'augmenter les contraintes radiales exercées par le corps de pompe sur ce second piston. Ceci implique toutefois un effort d'actionnement supérieur pour la pompe. Un tel dysfonctionnement des clapets de la chambre de pompe peut avoir pour conséquence une dose non régulière, puisque les moments d'ouverture et de fermeture desdits clapets ne seraient plus précisément prédéterminables et reproductibles à chaque actionnement.

Le document US - 5 375 745 divulgue une pompe selon le préambule de la revendication 1.

La présente invention a pour but de fournir une pompe de distribution de produit fluide à actionnement manuel qui ne reproduit pas les inconvénients susmentionnés.

Ainsi, la présente invention a pour but de fournir une telle pompe de distribution qui permette de varier les contraintes radiales exercées sur le ou les piston(s) de la pompe entre leur position de repos et de distribution respective.

La présente invention a aussi pour but de fournir une telle pompe de distribution de produit fluide qui assure une précision et une reproductibilité de la dose de produit expulsé à chaque actionnement de la pompe.

La présente invention a aussi pour but de fournir une telle pompe de distribution qui soit simple et peu coûteuse à fabriquer et à assembler.

La présente invention a donc pour objet une pompe de distribution de produit fluide à actionnement manuel, telle que décrite dans la revendication 1.

Des modes de réalisation avantageux sont décrits dans les revendications dépendantes.

La présente invention a également pour objet un dispositif de distribution de produit fluide comportant une pompe telle que définie ci-dessus.

D'autres caractéristiques et avantages de la présente invention apparaîtront plus clairement au cours de la description détaillée suivante faite en référence aux dessins joints, donnés à titres d'exemples non limitatifs, et sur lesquels :
- la figure 1 est une vue schématique en section transversale d'une pompe selon un mode de réalisation avantageux de la présente invention ;
- la figure 2 est une vue de détail à échelle agrandie d'une pompe selon une première variante de réalisation de la présente invention ;
- la figure 3 est une vue similaire à celle de la figure 2, montrant une seconde variante de réalisation de la présente invention ; et
- la figure 4 est une vue de détail à échelle agrandie d'un autre mode de réalisation de la présente invention.

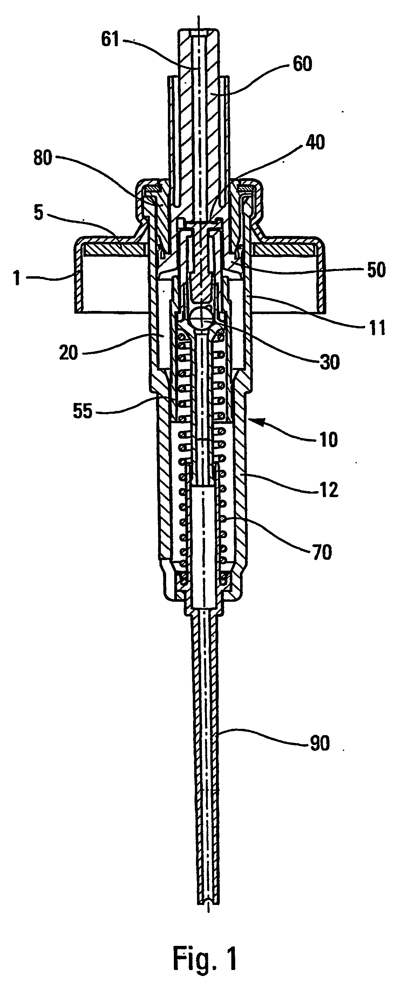

La figure 1 représente une pompe comportant un corps de pompe 10 dans lequel coulisse un premier piston 50 et un second piston 55 entre des positions de repos et de distribution respectives. La description de la présente invention va être faite en relation à cette pompe particulière, mais il est entendu que l'invention ne se limite pas à la pompe représentée sur la figure 1. Au contraire, la présente invention s'applique à toute pompe de distribution de produit fluide dans laquelle au moins un piston coulisse dans un corps de pompe. Plus précisément, si dans la pompe de la figure 11a présente invention incorpore deux parties distinctes de corps de pompe avec deux pistons mettant chacune en oeuvre la présente invention, il est tout à fait envisageable d'appliquer la présente invention à des pompes n'ayant qu'un seul piston, ou ayant deux pistons, mais seulement un desdits pistons coulissant dans un corps de pompe incorporant la présente invention.

La pompe de la figure 1 comporte donc un corps de pompe 10 pourvu d'une première partie 11 de corps de pompe dans laquelle coulisse un premier piston 50 et d'une seconde partie 12 de corps de pompe dans laquelle coulisse un second piston 55. La seconde partie 12 de corps de pompe peut avoir un diamètre interne réduit par rapport à la première partie 11 de corps de pompe. Par conséquent, le second piston 55 peut avoir un diamètre externe réduit par rapport au diamètre externe du premier piston 50. Une chambre de pompe 20 est définie entre lesdits pistons 50 et 55, ladite chambre de pompe comportant un clapet d'entrée 30 et un clapet de sortie 40. Le premier piston 50 peut avantageusement être lié de manière monobloc à une tige d'actionnement 60, de préférence creuse, et incorporant un canal d'expulsion 61 pour le produit. Un ressort de rappel 70 est généralement disposé dans le corps de pompe 10 et coopère avantageusement avec le second piston 55 pour ramener la pompe automatiquement la pompe vers sa position après chaque actionnement. Une virole 80 peut être emmanchée dans le bord supérieur du corps de pompe 10 pour définir la position de repos du premier piston 50, et une tube-plongeur 90 peut être assemblé sur le bord opposé du corps de pompe 10 pour s'étendre vers le fond d'un réservoir (non représenté). La pompe de la figure 1 peut être assemblée sur un réservoir (non représenté) au moyen d'une bague de fixation 1 qui peut être quelconque, et notamment vissable, encliquetable ou sertissable. Généralement, un joint d'étanchéité 5 est interposé entre ladite bague de fixation 1 et le col du réservoir (non représenté).

Selon la présente invention, au moins une partie du corps de pompe est réalisée de manière à être au moins partiellement tronconique, pour modifier les contraintes radiales exercées par ledit corps de pompe 10 sur ledit premier piston 50 et/ou sur ledit second piston S5.

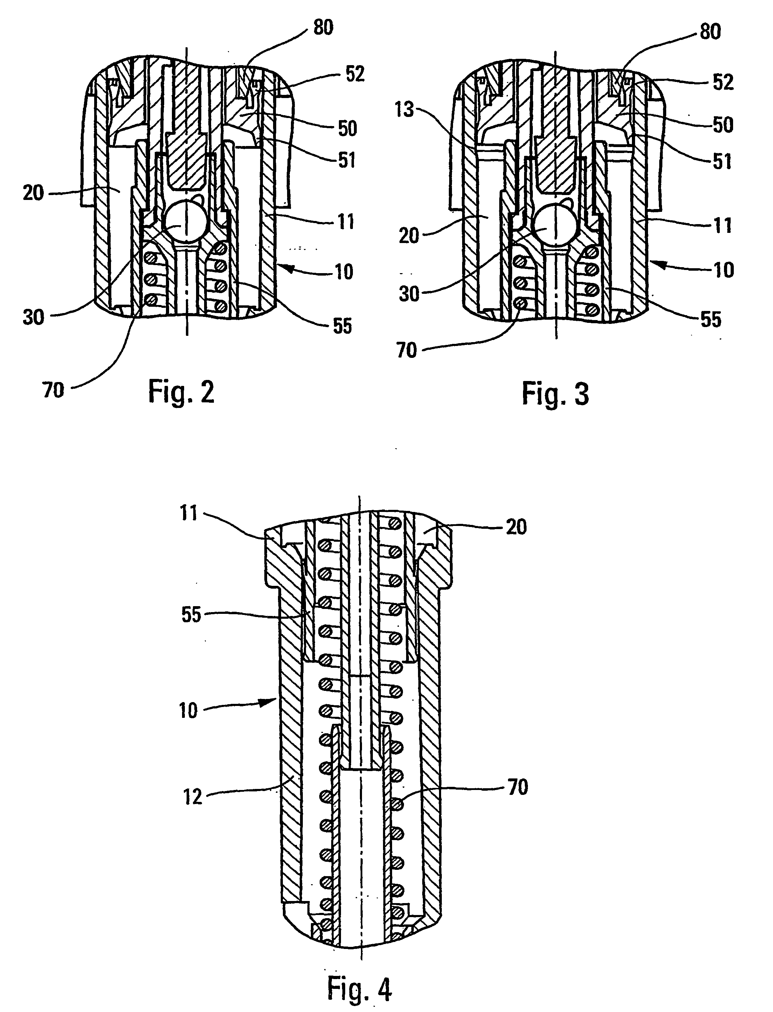

Les figures 2 et 3 montrent deux variantes de réalisation de l'invention, appliquées à la première partie 11 de corps de pompe dans laquelle coulisse le premier piston 50. Comme visible sur les figures 2 et 3, le diamètre interne de la première partie 11 de corps de pompe est supérieur dans la position de repos du piston 50 par rapport au diamètre interne de la première partie 11 de corps de pompe dans la position de distribution dudit premier piston 50. Cette modification du diamètre interne de la première partie 11 de corps de pompe peut être obtenue en réalisant ladite première partie 11 de corps de pompe de manière tronconique entre lesdites positions de repos et distribution, comme représenté sur la figure 2. En variante, on peut prévoir une partie cylindrique s'étendant à partir de la position de distribution en direction de la position de repos du premier piston 50, et avant d'atteindre cette position de repos du premier piston 50, qui est celle représentée sur la figure 3, la première partie 11 de corps de pompe peut comporter une petite partie tronconique 13. Comme visible sur les figures 2 et 3, le premier piston 50 comporte généralement deux lèvres d'étanchéité, une lèvre d'étanchéité inférieure 51 et une lèvre d'étanchéité supérieure 52. Grâce à la présente invention, ce premier piston 50, et notamment ses lèvres d'étanchéité 51, 52 sont soumises à des contraintes radiales inférieures lorsque le piston est en position de repos. Ceci permet de soulager l'effort sur lesdites lèvres d'étanchéité 51, 52, et donc d'augmenter la durée de vie du piston et par conséquent de la pompe.

En référence à la figure 4, il est représenté la seconde partie 12 de corps de pompe dans laquelle coulisse le second piston 55. Dans ce cas, la situation est inversée par rapport à la description ci-dessus, en ce que le diamètre interne de la seconde partie 12 de corps de pompe au niveau de la position de repos du second piston 55 est inférieur au diamètre interne de la seconde partie 12 de corps de pompe au niveau de la position de distribution dudit second piston 55. Cette modification du diamètre interne peut être obtenue en réalisant la seconde partie 12 de corps de pompe de manière tronconique entre les positions de repos et de distribution du second piston 55. En variante, on peut réaliser successivement plusieurs parties cylindriques en alternance avec plusieurs parties tronconiques. En effet, dans le mode de réalisation de la figure 4, l'objectif est d'obtenir une augmentation progressive de la contrainte radiale sur le second piston 55 au fur et à mesure que ce second piston 55 revient de sa position de distribution vers sa position de repos. Dans l'exemple décrit en référence aux figures 2 et 3 concernant la première partie 11 de corps de pompe, il n'y a pas cette exigence d'augmentation ou de diminution progressive de la contrainte radiale, mais simplement le souhait de diminuer les contraintes radiales dans la position de repos du premier piston 50. La variante de la figure 3, avec une petite partie tronconique disposée juste avant la position de repos du premier piston 50 et qui relie une partie cylindrique à une autre partie cylindrique est donc tout à fait envisageable pour le premier piston 50, alors que pour le second piston 55, il est préférable d'obtenir une modification progressive de cette contrainte radiale. L'invention appliquée à la seconde partie 12 de corps de pompe permet de diminuer le risque de dysfonctionnement des clapets d'entrée 30 ou de sortie 40 de la chambre de pompe 20. Un tel dysfonctionnement pourrait se produire si le second piston 55 remonte trop rapidement en direction de sa position de repos en raison de la dépression créée à l'intérieur de la chambre de pompe 20 lors de l'expulsion du produit. La présente invention, en augmentant progressivement le frottement sur le second piston 55, élimine pratiquement ce risque sans augmenter l'effort d'actionnement de la pompe. On assure ainsi une régularité, une précision et une reproductibilité de la dose distribuée à chaque actionnement de la pompe. De même, le fait d'augmenter le frottement pendant la remontée du second piston 55 vers sa position de repos a pour effet de le ralentir, ce qui est favorable aussi bien pour la distribution de la dose de produit contenue dans la chambre de pompe 20, que pour la prise de la prochaine dose à partir du réservoir (non représenté). La fiabilité de la pompe est ainsi améliorée.

Dans le mode de réalisation de la figure 1, lorsque le corps de pompe comporte deux parties de corps de pompe de diamètre différent dans lesquelles coulisse un piston respectif, on peut donc appliquer la présente invention à ces deux parties de corps de pompe, la forme intérieur du corps de pompe étant alors cintrée. Ainsi, en partant du bord supérieur du corps de pompe, le diamètre interne se ressert en direction de la jonction entre la première partie 11 de corps de pompe et la seconde partie 12 de corps de pompe, puis, à partir de là, le diamètre interne augmente à nouveau en direction du fond du corps de pompe.

Bien que la présente invention ait été décrite en référence à plusieurs modes de réalisation de celle-ci, il est entendu qu'un homme du métier peut y apporter toutes modifications sans sortir du cadre de la présente invention tel que défini par les revendications annexées.

## Revendications

1. Pompe de distribution de produit fluide à actionnement manuel comportant un corps de pompe (10), ledit corps de pompe (10) comportant une première partie (11) de corps de pompe et une seconde partie (12) de corps de pompe, **caractérisée en ce que** un premier piston (50) coulisse de manière étanche dans ladite première partie (11) de corps de pompe entre une position de repos et une position de distribution, et un second piston (55) coulisse de manière étanche dans ladite seconde partie (12) de corps de pompe entre une position de repos et une position de distribution, au moins une desdites première et seconde parties (11, 12) de corps de pompe étant au moins partiellement tronconique pour modifier les contraintes radiales exercées sur ledit premier piston (50) et/ou sur ledit second piston (55) entre lesdites positions de repos et de distribution.

2. Pompe selon la revendication 1, dans laquelle ledit piston (50) coulisse dans une partie (11) de corps de pompe entre la position de repos et la position de distribution, le diamètre interne de ladite partie (11) de corps de pompe qui coopère avec ledit piston (50) dans la position de repos étant supérieur au diamètre interne de ladite partie (11) de corps de pompe qui coopère avec ledit piston (50) dans la position de distribution, de sorte que les contraintes radiales exercées par le corps de pompe (10) sur ledit piston (50) sont inférieures en position de repos.

3. Pompe selon la revendication 2, dans laquelle ladite partie (11) de corps de pompe est tronconique entre les positions de repos et de distribution du piston (50).

4. Pompe selon la revendication 2, dans laquelle ladite partie (11) de corps de pompe comporte une partie tronconique et au moins une partie cylindrique.

5. Pompe selon la revendication 4, dans laquelle ladite partie (11) de corps de pompe est cylindrique à partir de la position de distribution dudit piston (50) en direction de la position de repos dudit piston (50), et comporte une partie tronconique (13) avant la position de repos dudit piston (50).

6. Pompe selon la revendication 1, dans laquelle ledit piston (55) coulisse dans une partie (12) de corps de pompe entre une position de repos et une position de distribution, le diamètre interne de ladite partie (12) de corps de pompe qui coopère avec ledit piston (55) dans la position de repos étant inférieur au diamètre interne de ladite partie (12) de corps de pompe qui coopère avec ledit piston (55) dans la position de distribution, de sorte que les contraintes radiales exercées par le corps de pompe (10) sur ledit piston (55) sont supérieures en position de repos.

7. Pompe selon la revendication 6, dans laquelle ladite partie (12) de corps de pompe est tronconique entre les positions de repos et de distribution dudit piston (55).

8. Pompe selon la revendication 6, dans laquelle ladite partie (12) de corps de pompe comporte au moins une partie tronconique et au moins une partie cylindrique.

9. Pompe selon l'une quelconque des revendications précédentes, dans laquelle le diamètre interne de ladite première partie (11) de corps de pompe est supérieur dans la position de repos dudit premier piston (50) que dans sa position de distribution, et le diamètre interne de ladite seconde partie (12) de corps de pompe est inférieur dans la position de repos dudit second piston (55) que dans sa position de distribution.

10. Dispositif de distribution de produit fluide, **caractérisé en ce qu'**il comporte une pompe selon l'une quelconque des revendications précédentes.

## Patentansprüche

1. Von Hand zu betätigende Abgabepumpe für ein fluidförmiges Produkt, die einen Pumpenkörper (10) umfasst, wobei der Pumpenkörper (10) einen ersten Teil (11) des Pumpenkörpers und einen zweiten Teil (12) des Pumpenkörpers aufweist, **dadurch gekennzeichnet, dass** ein erster Kolben (50) in dichter Weise in dem ersten Teil (11) des Pumpenkörpers zwischen einer Ruhelage und einer Abgabestellung gleitet, und dass ein zweiter Kolben (55) in dichter Weise in dem zweiten Teil (12) des Pumpenkörpers zwischen einer Ruhelage und einer Abgabestellung gleitet, wobei wenigstens einer der beiden ersten und zweiten Teile (11, 12) des Pumpenkörpers zumindest teilweise stumpfkegelig ausgebildet ist, um die radialen Belastungen zu modifizieren, die auf den ersten Kolben (50) und/oder auf den zweiten Kolben (55) zwischen den Ruhelagen und den Abgabestellungen ausgeübt werden.

2. Pumpe nach Anspruch 1, bei der der Kolben (50) in einem Teil (11) des Pumpenkörpers zwischen der Ruhelage und der Abgabestellung gleitet, wobei der Innendurchmesser des besagten Teiles (11) des Pumpenkörpers, der mit dem Kolben (50) in der Ruhelage zusammenwirkt, einen größeren Innendurchmesser als der Teil (11) des Pumpenkörpers besitzt, der mit dem Kolben (50) in der Abgabestellung zusammenwirkt, derart, dass die vom Pumpenkörper (10) auf den Kolben (50) in radialer Richtung ausgeübten Belastungen in der Ruhelage kleiner sind.

3. Pumpe nach Anspruch 2, bei der der Teil (11) des Pumpenkörpers zwischen der Ruhelage und der Abgabestellung des Kolbens (50) stumpfkegelig ausgebildet ist

4. Pumpe nach Anspruch 2, bei der der Teil (11) des Pumpenkörpers einen stumpfkegeligen Teil und wenigstens einen zylindrischen Teil umfasst.

5. Pumpe nach Anspruch 4, bei der der Teil (11) des Pumpenkörpers ausgehend von der Abgabestellung des Kolbens (50) in Richtung der Ruhelage des Kolbens (50) zylindrisch Ist und einen stumpfkegeligen Teil (13) vor der Ruhelage des Kolbens (50) umfasst.

6. Pumpe nach Anspruch 1, bei der der Kolben (55) In einem Teil (12) des Pumpenkörpers zwischen einer Ruhelage und einer Abgabestellung gleitet, wobei der Innendurchmesser dieses Teils (12) des Pumpenkörpers, der mit dem Kolben (55) in der Ruhelage zusammenwirkt, kleiner ist als der Innendurchmesser des Teils (12) des Pumpenkörpers, der mit dem Kolben (55) in der Abgabestellung zusammenwirkt, so dass die radialen Belastungen, die vom Pumpenkörper (10) auf den Kolben (55) ausgeübt werden, in der Ruhelage größer sind.

7. Pumpe nach Anspruch 6, bei der der Teil (12) des Pumpenkörpers zwischen der Ruhelage und der Abgabestellung des Kolbens (55) stumpfkegelig ist.

8. Pumpe nach Anspruch 6, bei der der Teil (12) des Pumpenkörpers wenigstens einen stumpfkegeligen Teil und wenigstens einen zylindrischen Teil umfasst.

9. Pumpe nach einem der vorhergehenden Ansprüche, bei der der Innendurchmesser des ersten Teils (11) des Pumpenkörpers in der Ruhelage des ersten Kolbens (50) größer ist als in dessen Abgabestellung, und bei der der Innendurchmesser des zweiten Teils (12) des Pumpenkörpers in der Ruhelage des zweiten Kolbens (55) kleiner ist als in dessen Abgabestellung.

10. Abgabevorrichtung für ein fluidförmiges Produkt, **dadurch gekennzeichnet, dass** sie eine Pumpe nach einem der vorhergehenden Ansprüche umfasst.

## Claims

1. A manually-actuated fluid dispenser pump including a pump body (10), said pump body (10) having a first pump body portion (11) and a second pump body portion (12), **characterized in that** a first piston (50) is mounted to slide in leaktight manner in said first pump body portion (11) between a rest position and a dispensing position, and a second piston (55) is mounted to slide in leaktight manner in said second pump body portion (12) between a rest position and a dispensing position, at least one of said first and second pump body portions (11, 12) being frustoconical at least in part so as to modify the radial stresses exerted on said first piston (50) and/or on said second piston (55) between said rest positions and said dispensing positions.

2. A pump according to claim 1, in which said piston (50) is mounted to slide in a pump body portion (11) between the rest position and the dispensing position, the inside diameter of said pump body portion (11) that co-operates with said piston (50) in the rest position being larger than the inside diameter of said pump body portion (11) that co-operates with said piston (50) in the dispensing position, so that the radial stresses exerted by the pump body (10) on said piston (50) are smaller in the rest position.

3. A pump according to claim 2, in which said pump body portion (11) is frustoconical between the rest position and the dispensing position of the piston (50).

4. A pump according to claim 2, in which said pump body portion (11) has a frustoconical portion and at least one cylindrical portion.

5. A pump according to claim 4, in which said pump body portion (11) is cylindrical starting from the dispensing position of said piston (50) going towards the rest position of said piston (50), and it has a frustoconical portion (13) before the rest position of said piston (50).

6. A pump according to claim 1, in which said piston (55) is mounted to slide in a pump body portion (12) between a rest position and a dispensing position, the inside diameter of said pump body portion (12) that co-operates with said piston (55) in the rest position being smaller than the inside diameter of said pump body portion (12) that co-operates with said piston (55) in the dispensing position, so that the radial stresses exerted by the pump body (10) on said piston (55) are larger in the rest position.

7. A pump according to claim 6, in which said pump body portion (12) is frustoconical between the rest position and the dispensing position of said piston (55).

8. A pump according to claim 6, in which said pump body portion (12) has at least one frustoconical portion and at least one cylindrical portion.

9. A pump according to any preceding claims, in which the inside diameter of said first pump body portion (11) is larger where the first piston (50) is in the rest position than where it is in its dispensing position, and the inside diameter of said second pump body portion (12) is smaller where the second piston (55) is in the rest position than where it is in its dispensing position.

10. A fluid dispenser device, **characterized in that** it includes a pump according to any preceding claim.
